# DEMANDE DE BREVET EUROPEEN

(11) **EP 4 656 280 A1**
(43) Date de publication de la demande: **03.12.2025**
(21) Numéro de dépôt: 24305841.9
(22) Date de dépôt: 28.05.2024
(51) Int. Cl.: B01J 4/00, B01J 8/08, C10J 3/50, B65G 65/32, C10J 3/74, C10J 3/80

(54) **DISPOSITIF MELANGEUR POUR GAZEIFIEUR ET PROCEDE DE GAZEIFICATION**

(71) Demandeur: Rousseau, Louis, 69270 Rochetaillee-sur-Saone (FR)
(72) Inventeur: Rousseau, Louis, 69270 Rochetaillee-sur-Saone (FR)
(74) Mandataire: Cabinet Beau de Loménie

(57) **Abrégé**

L'invention concerne un dispositif mélangeur de particules et d'un gaz oxydant, comprenant une tête conique d'injection permettant de constituer une veine cylindro-conique de flux gazeux présentant un angle au sommet allant de 60 à 120° provoquant un éclatement corollaire du mélange comburant de particules. L'invention concerne également un équipement comprenant le dispositif mélangeur conforme à l'invention et équipé d'un système d'amenée de particules et d'une virole d'adaptation. L'invention concerne aussi un appareillage comprenant un gazéifieur assemblé à un dispositif mélangeur conforme à l'invention. Enfin, l'invention concerne un procédé de pyrogazéification mettant en oeuvre un appareillage conforme à l'invention.

## Description

### Domaine Technique

L'invention concerne le domaine de la gazéification de la biomasse, et plus particulièrement à un dispositif et un procédé de mise en suspension et de mélange de particules dans un flux de gaz oxydant.

### Technique antérieure

La gazéification désigne une transformation thermochimique consistant à décomposer par la chaleur un solide combustible carboné en présence d'un réactif gazeux dans le but d'obtenir un gaz de synthèse, nommé syngas, riche en monoxyde de carbone et en dihydrogène. Pour réaliser la gazéification, trois principaux types de réacteurs sont employés : les réacteurs à lit fixe, les réacteurs à lit fluidisé, et les réacteurs à flux entrainé.

Dans les réacteurs à lit fixe, le combustible est injecté par le haut du réacteur et forme un lit dense qui se déplace verticalement vers le bas du réacteur au fur et à mesure de la gazéification du combustible. Le gaz réactif peut être injecté à différents niveaux, selon que le réacteur est à lit fixe à co-courant, contre-courant ou à courant croisé. Ces réacteurs présentent l'avantage d'être peu coûteux, ainsi que de tolérer des particules de taille élevée et une humidité de la biomasse élevée. Cependant, leur puissance est relativement limitée.

Dans les réacteurs à lit fluidisé, la biomasse est mise en suspension par le gaz réactif qui est injecté par le bas du réacteur. Les particules de biomasse sont disséminées dans un minéral pour assurer la fluidité du lit et la diffusion de la chaleur. Les transferts de matière et de chaleur au sein du lit sont alors améliorés par rapport au lit fixe, ce qui permet d'augmenter les cinétiques de réaction. En revanche, il est nécessaire de broyer plus finement les particules de biomasse comparé au réacteur à lit fixe.

Dans les réacteurs à flux entraîné, le combustible, sous forme pulvérulente ou de fines gouttelettes, est injecté dans le réacteur avec le gaz oxydant. Les avantages des réacteurs à flux entraîné sont notamment une très bonne conversion du combustible avec une cinétique rapide, et la forte puissance générée. Les enjeux de ces réacteurs concernent la préparation du combustible, qui nécessite d'être broyé sous forme de petites particules ou disséminé sous forme de fines gouttelettes, et sa mise en suspension dans le milieu oxydant. En effet, il est indispensable que les particules de combustible soient dispersées de façon homogène dans le gaz oxydant, et qu'elles soient agitées. En l'absence de brassage et d'agitation, le rendement de conversion est insatisfaisant, et il est alors nécessaire de séparer les particules de combustible n'ayant pas réagi, ce qui complexifie le procédé et augmente les coûts.

### Exposé de l'invention

L'objet de l'invention est de remédier aux inconvénients de l'état de la technique en proposant un dispositif mélangeur permettant non seulement de disperser les particules (de biomasse en particulier) de façon homogène dans le gaz oxydant, mais également d'assurer leur agitation, et ainsi améliorer le taux de conversion. Pour atteindre un tel objectif, le dispositif mélangeur de particules et de gaz oxydant conforme à l'invention présente une base à partir de laquelle s'élève une paroi cylindrique externe, une paroi cylindrique interne définissant avec la paroi cylindrique externe une zone d'amenée de gaz, la paroi cylindrique interne définissant intérieurement une chambre de mélange, la base étant pourvue d'une section d'amenée de particules dans la chambre de mélange, le dispositif mélangeur comprenant une arrivée de gaz oxydant débouchant dans la zone d'amenée de gaz, ledit dispositif mélangeur étant caractérisé en ce que :
- une tête conique d'injection communique avec la zone d'amenée de gaz pour déboucher dans la chambre de mélange, pour constituer une veine cylindro-conique de flux gazeux présentant un angle au sommet allant de 60 à 120°,
- la tête conique d'injection comporte une semelle tronconique supportée par la base et surmontée par une paroi de raccordement tronconique définissant un conduit d'amenée cylindro-conique, et
- la paroi de raccordement est positionnée entre la paroi cylindrique interne et la semelle tronconique, et comporte une face cylindro-conique de liaison bordant la veine cylindro-conique de flux gazeux et s'étendant jusqu'à la paroi cylindrique interne, pour créer une zone mélange tourbillonnaire.

Le dispositif mélangeur selon l'invention présente l'avantage de disperser de façon homogène les particules dans le gaz oxydant, et de les mélanger efficacement selon une vitesse et une trajectoire particulières. Avantageusement, les particules ont une trajectoire tourbillonnaire, qui conduit à un mouvement vibratoire suite à un éclatement corollaire du flux gazeux oxydant chargé de particules sur une face cylindro-conique de liaison.

Le dispositif mélangeur conforme à l'invention présente également l'avantage de pouvoir être utilisé non seulement pour mélanger les particules de biomasse et de gaz oxydant dans le réacteur, mais également pour mélanger les particules gazeuses avec du gaz oxydant (contenant avantageusement de la vapeur d'eau) pour transformer le gaz à l'air en gaz à l'eau.

Le dispositif mélangeur conforme à l'invention présente avantageusement l'une ou l'autre des caractéristiques suivantes, ou une combinaison de celles-ci :
- la veine cylindro-conique de flux gazeux est positionnée en bordure de la section d'amenée ;
- le profil du conduit d'amenée présente une partie de raccordement incurvée et une partie rectiligne d'injection dans la chambre de mélange ; et
- le conduit d'amenée de gaz oxydant comprend un décroché annulaire à son entrée.

Un autre objet de l'invention concerne un équipement comprenant le dispositif mélangeur conforme à l'invention équipé d'un système d'amenée de particules permettant l'introduction de particules à travers la section d'amenée de particules, et d'une virole d'adaptation sur un gazéifieur, une embase inférieure de la virole d'adaptation supportant une plaque de fermeture du dispositif mélangeur.

L'équipement conforme à l'invention présente l'avantage de permettre l'adaptation du dispositif mélangeur selon l'invention grâce à une virole d'adaptation. Selon le choix de la virole, et plus particulièrement selon ses dimensions, le dispositif mélangeur pourra être assemblé à différents gazéifieurs, c'est-à-dire des gazéifieurs de tailles variées et de géométrie différentes (horizontal ou vertical, ascendant ou descendant).

L'équipement conforme à l'invention présente avantageusement l'une ou l'autre des caractéristiques suivantes, ou une combinaison de celles-ci :
- le système d'amenée est une vis sans fin ; et
- la virole d'adaptation est de forme tronconique.

Un autre objet de l'invention concerne un appareillage comprenant un gazéifieur assemblé à un dispositif mélangeur conforme à l'invention.

L'appareillage conforme à l'invention présente avantageusement l'une ou l'autre des caractéristiques suivantes, ou une combinaison de celles-ci :
- le gazéifieur et le dispositif mélangeur sont assemblés de manière amovible ou permanente ;
- le dispositif mélangeur est équipé d'un système d'amenée de particules permettant l'introduction de particules à travers la section d'amenée de particules, et d'une virole d'adaptation au gazéifieur, une embase inférieure de la virole d'adaptation supportant une plaque de fermeture du dispositif mélangeur ; et
- la virole d'adaptation est de forme tronconique.

Enfin, l'invention concerne également un procédé de gazéification (ou pyrogazéification) comprenant les étapes suivantes :
a- disposer d'un appareillage conforme à l'invention,
b- introduire des particules par la section d'amenée de particules,
c- introduire du gaz oxydant à travers l'arrivée de gaz oxydant de sorte que la vitesse de gaz oxydant à la sortie du conduit d'amenée de gaz oxydant va de 50 à 150 m/s.

Le procédé selon l'invention présente l'avantage d'être continu. En effet, l'ensemble de ce qui est introduit dans l'appareillage ressort sous forme de gaz.

Le procédé selon l'invention présente l'avantage d'être facile de mise en oeuvre et de permettre la production d'un gaz de synthèse de bonne qualité.

Le procédé selon l'invention présente avantageusement l'une ou l'autre des caractéristiques suivantes, ou une combinaison de celle-ci :
- le procédé comprend une étape d ultérieure à l'étape c, consistant à introduire du gaz combustible dans le gaz oxydant, et allumer un brûleur présent sur le dispositif mélangeur, afin d'enflammer le gaz combustible dans la chambre de mélange.
- le flux de gaz oxydant entrant en contact des particules crée un flux bouillonnant de gaz oxydant et de particules, avantageusement par un éclatement corollaire ;
- le gaz oxydant à l'étape c est chauffé par un brûleur de sorte à se trouver à une température allant de 150 °C à 250°C à la sortie du conduit d'amenée ;
- le gaz oxydant est choisi parmi l'air, O₂, CO₂, la vapeur d'eau, ou un mélange de ces gaz éventuellement en combinaison avec H₂.

### Brève description des dessins

[Fig. 1] La figure 1 est une vue en coupe d'un appareillage selon un premier mode de réalisation de l'invention, dans lequel le dispositif mélangeur est équipé d'un système d'amenée de particules, et d'une virole d'adaptation sur un gazéifieur
[Fig. 2] La figure 2 est une vue en coupe d'un dispositif mélangeur selon un premier mode de réalisation de l'invention, équipé d'un système d'amenée de particules.
[Fig. 3] La figure 3 est une vue en coupe d'un dispositif mélangeur assemblé à un gazéifieur selon un deuxième mode de réalisation de l'invention.
[Fig. 4] Les figures 4 A-C représentent schématiquement différentes positions dans lesquelles l'appareillage selon l'invention peut être employé.

### Description des modes de réalisation

### Dispositif mélangeur

L'invention concerne un dispositif mélangeur 1 de particules 2 et de gaz oxydant destiné à être assemblé à un gazéifieur 3.

Les particules 2 peuvent être des particules solides, liquides (par exemple des boues pompables sous forme de gouttelettes) ou gazeuses. Lorsque les particules sont sous forme solide ou liquide boueuse, la taille moyenne D50 des particules va de 0,1 mm à 0,5 mm. La taille moyenne D50 correspond à la taille moyenne des particules (correspondant à la plus grande dimension desdites particules) pour laquelle 50% en volume des particules sont de plus petite taille, tel que mesuré par la technique de granulométrie laser. Lorsque les particules sont sphériques, la taille moyenne D50 correspond au diamètre moyen D50.

Selon un premier mode de réalisation, les particules 2 sont des particules de combustible, tel que des particules de biomasse ou de poudre de bois par exemple. Selon ce premier mode de réalisation, les particules sont solides, voire liquides comme des boues pompables.

Selon un second mode de réalisation, les particules 2 sont des particules gazeuses, issues de la transformation thermochimique de biomasse ou de poudre de bois en gaz de synthèse par exemple.

Selon un troisième mode de réalisation, les particules 2 sont sous forme de mélange de particules gazeuses, et/ou liquides boueuses et/ou solides.

Le gaz oxydant peut être choisi parmi l'air, O₂, CO₂, la vapeur d'eau ou un mélange de ces gaz. Selon un mode de réalisation particulier, le gaz oxydant peut également comprendre du dihydrogène, afin de modifier la composition chimique du gaz de synthèse produit.

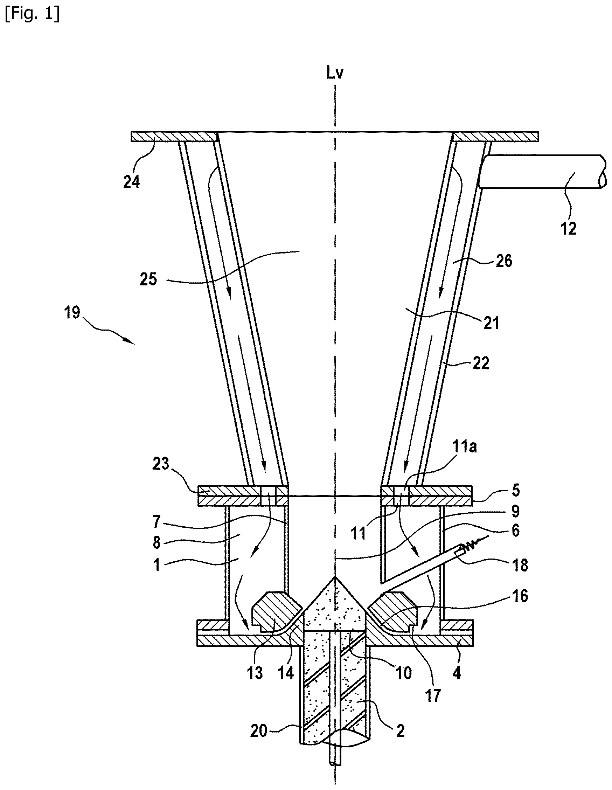

Tel qu'illustré dans les figures 1 à 3, le dispositif mélangeur 1 comprend une base 4 et une plaque de fermeture 5, de préférence disposés de manière sensiblement parallèle, et reliées entre elles par une paroi cylindrique externe 6. Le dispositif mélangeur 1 comprend également une paroi cylindrique interne 7 disposée sensiblement perpendiculairement à la plaque de fermeture 5, pour former avec la paroi cylindrique externe 6 une zone d'amenée de gaz 8. Les parois cylindriques externe 6 et interne 7 sont avantageusement disposées de manière sensiblement parallèle et de sorte que l'écartement entre ces deux parois est sensiblement constant. En d'autres termes, la zone d'amenée de gaz 8 est de forme annulaire.

La paroi cylindrique interne 7 définit intérieurement une chambre de mélange 9, dans laquelle les particules 2 et le gaz oxydant sont destinés à être mélangés et agités ensemble, afin que les réactions thermochimiques puissent avoir lieu.

La base 4 du dispositif mélangeur 1 est pourvue d'une section d'amenée 10 de particules 2. En d'autres termes, les particules 2, quelle que soit leur forme (solide, boueuse pompable ou gazeuse), sont introduites à travers la section d'amenée 10 dans le dispositif mélangeur 1, et plus précisément dans la chambre de mélange 9 du dispositif mélangeur 1.

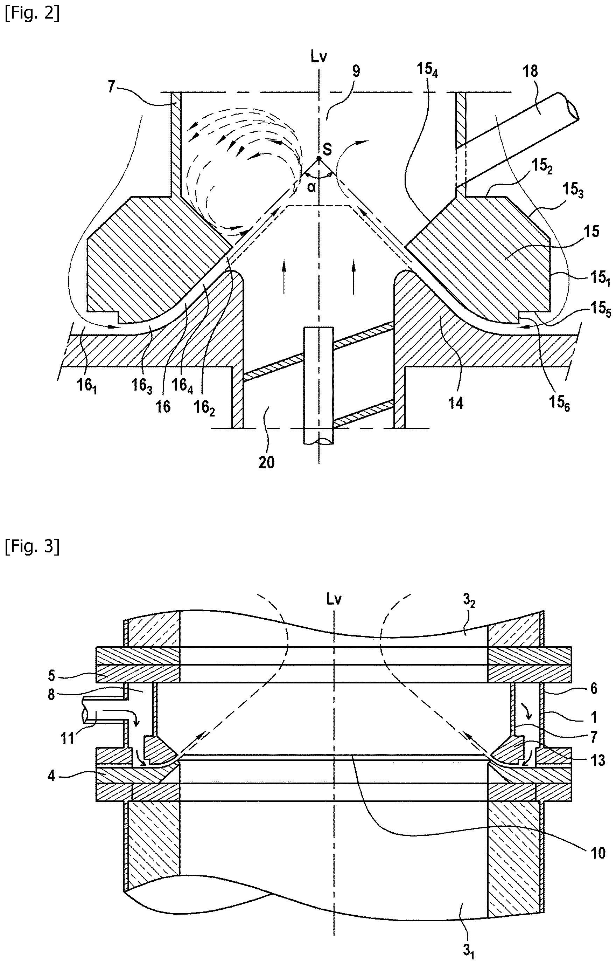

Le dispositif mélangeur 1 comporte également une arrivée de gaz oxydant 11 qui débouche dans la zone d'amenée de gaz 8. Selon un premier mode de réalisation illustré à la figure 1, cette arrivée de gaz oxydant 11 est sous la forme d'un ou plusieurs orifices cylindriques ou lumières arrondies dans la plaque de fermeture 5 du dispositif mélangeur 1. Alternativement, selon un second mode de réalisation illustré à la figure 3, l'arrivée de gaz oxydant 11, se présente sous la forme d'un canal débouchant dans la zone d'amenée de gaz oxydant 8, et de préférence positionné à proximité de la plaque de fermeture 5.

Le dispositif mélangeur 1 comprend une tête conique d'injection 13 communiquant avec la zone d'amenée de gaz 8 pour déboucher dans la chambre de mélange 9. Selon l'exemple illustré dans les figures 1 à 3, la tête conique d'injection 13 comporte une semelle tronconique 14 et une paroi de raccordement 15. La semelle tronconique 14 est accolée à la base 4 du dispositif mélangeur. En d'autres termes, la base 4 du dispositif mélangeur supporte la semelle tronconique 14 de la tête conique d'injection 13.

La paroi de raccordement 15 est positionnée entre la paroi cylindrique interne 6 et la semelle tronconique 14. Plus précisément, la paroi de raccordement 15 est solidaire de la paroi cylindrique interne 6, et définit avec la semelle tronconique 14 un conduit d'amenée 16, avantageusement cylindro-conique, reliant la zone d'amenée de gaz 8 et la chambre de mélange 9. Le conduit d'amenée 16 se présente sous la forme d'une fente annulaire, et comprend une entrée 16₁ et une sortie 16₂. Selon l'exemple illustré, le conduit d'amenée 16 présente une partie de raccordement 16₃ qui est incurvée, et une partie rectiligne 16₄ d'injection dans la chambre de mélange 9. La section du conduit d'amenée 16 est avantageusement circulaire, bien qu'une autre forme puisse être envisagée sans sortir du cadre de l'invention.

La paroi de raccordement 15 est avantageusement de forme tronconique, et comprend une face externe verticale 15₁ reliée à une face supérieure horizontale 15₂ par une face externe de liaison 15₃. La face supérieure horizontale 15₂ est avantageusement reliée par une face cyclindro-conique de liaison 15₄ à la sortie 16₂ du conduit d'amenée 16 de gaz oxydant. La longueur de cette face cyclindro-conique de liaison 15₄ est déterminée par l'homme du métier en fonction de la puissance désirée lors du procédé de gazéification.

Tel que schématisé par les flèches sur les figures, lors de l'utilisation du dispositif mélangeur 1 selon l'invention, le gaz oxydant entre par l'arrivée de gaz oxydant 11, traverse la zone d'amenée de gaz 8, puis traverse le conduit d'amenée 16 de gaz oxydant et débouche dans la chambre de mélange 9, afin de constituer une veine cylindro-conique de flux gazeux. Selon une caractéristique de l'invention, la veine cylindro-conique de flux gazeux présente un angle au sommet allant de 60 à 120°, et de préférence de 90° (en particulier pour les solides) à 120° (en particulier pour les liquides ou boues pompables). Selon un mode de réalisation avantageux de l'invention, la veine cylindro-conique de flux gazeux présente un angle au sommet de 90 °. Avantageusement, la veine cylindro-conique de flux gazeux est positionnée en bordure de la section d'amenée 10 de particules 2 afin d'assurer un prélèvement et un mélange des particules 2 dans le gaz oxydant, comme cela sera explicité ultérieurement. Tel qu'illustré à la figure 2, la paroi de raccordement 15 comporte avantageusement la face cylindro-conique de liaison 15₄ qui s'étend jusqu'à la paroi cylindrique interne 7 et qui borde la veine cylindro-conique. Comme cela sera détaillé ultérieurement, cette face cylindro-conique de liaison 15₄ permet de créer une zone de mélange tourbillonnaire, afin de créer un flux bouillonnant de gaz oxydant et de particules par éclatement corollaire.

Dans le cadre de l'invention, le flux gazeux contenu dans le conduit d'amenée 16 a une trajectoire sensiblement identique au conduit d'amenée 16. En particulier, lorsque le flux gazeux se trouve dans la partie rectiligne 16₄, sa trajectoire est rectiligne dans la direction de la partie rectiligne 16₄ du conduit d'amenée 16. Ensuite, le flux gazeux débouche du conduit d'amenée 16 par la sortie 16₂, et sa trajectoire n'est plus rectiligne. Le flux gazeux forme une veine cylindro-conique, dont l'angle peut être ajusté par l'homme du métier en fonction de ses besoins, tel que détaillé ci-dessus. L'angle au sommet de la veine cylindro-conique peut être ajusté par l'angle d'écoulement du flux de gaz oxydant, et donc par le dimensionnement du conduit d'amenée 16, et en particulier à l'angle formé entre la partie rectiligne 16₄ et la base 4. Ainsi, par exemple, lorsque l'angle au sommet désiré est de 90 °, l'angle formé entre la partie rectiligne 16₄ et la base 4 sera de 45 °.

Dans le cadre de l'invention, la veine cylindro-conique de flux gazeux est un cône de révolution défini par la partie rectiligne 16₄ du conduit d'amenée 16 en tant que génératrice, jusqu'au sommet S formé par l'intersection de ces génératrices, tel qu'illustré à la figure 2. L'angle au sommet de la veine cylindro-conique de flux gazeux est alors l'angle formé par l'intersection des génératrices, c'est-à-dire des axes longitudinaux de la partie rectiligne 16₄ (représenté par α sur la figure 2).

Selon un mode de réalisation, le conduit d'amenée 16 de gaz oxydant comprend un décroché annulaire 17 à son entrée 16₁, afin d'éviter un refoulement de flux gazeux oxydant. Le décroché annulaire 17 permet de stabiliser la pression de flux gazeux. Selon l'exemple illustré dans les figures 1 à 3, la face externe verticale 15₁ de la paroi de raccordement 15 de la tête conique d'injection 13 se prolonge à l'équerre par une paroi de liaison 15₅, qui se raccorde à fleur à une face de raccordement 15₆ qui est perpendiculaire à la paroi de liaison 15₅.

Selon un mode de réalisation particulier, le dispositif mélangeur 1 comporte également au moins un brûleur 18 destiné, à chaque départ d'un cycle à froid de pyrogazéification, à enflammer un gaz combustible introduit en mélange du gaz oxydant entrant dans la chambre de mélange 9. Ce brûleur 18 peut être positionné en différents endroits, mais est de préférence positionné pour permettre le chauffage du gaz oxydant à la sortie 16₂ du conduit d'amenée 16 de gaz oxydant, tel que cela est illustré à la figure 1 notamment. Le brûleur 18 permet de générer une flamme à la sortie 16₂ du conduit d'amenée 16, grâce à l'incorporation de gaz combustible dans le gaz oxydant en quantité suffisante, comme cela sera détaillé ultérieurement. Les brûleurs 18 pouvant être utilisés dans le cadre de l'invention sont connus de l'homme du métier, et ne seront pas détaillés ici.

Le dispositif mélangeur 1 est réalisé en un matériau pouvant résister aux conditions oxydantes, aux températures élevées, et aux vitesses élevées. Par exemple, le dispositif mélangeur 1 peut être réalisé en acier inoxydable et le conduit d'amenée 16 peut être revêtu de chrome dur.

### Equipement

L'invention concerne également un équipement 19 comprenant un dispositif mélangeur 1 conforme à l'invention équipé d'un système d'amenée 20 de particules 2, et d'une virole d'adaptation 21 sur un gazéifieur 3. L'équipement 19 est alors utilisé pour mélanger et agiter un médium carboné (biomasse ou poudre de bois par exemple) sous forme de particules et le gaz oxydant.

Le système d'amenée 20 de particules 2 permet l'introduction de particules 2 à travers la section d'amenée 10 de particules. Le système d'amenée 20 de particules 2 dépend de la nature (solide ou liquide tel que de la boue pompable) des particules, et peut être déterminé par l'homme du métier en fonction de ses besoins, et de la vitesse d'introduction souhaitée des particules 2 dans la chambre de mélange 9. Avantageusement, le système d'amenée 20 de particules 2 permet d'introduire les particules dans la chambre de mélange 9 à vitesse constante.

Dans l'exemple illustré à la figure 1, le système d'amenée 20 de particules 2 est une vis-sans-fin, et les particules 2 sont sous forme solide. Ainsi selon ce mode de réalisation illustré, les particules 2 solides sont introduites dans la chambre de mélange 9 via la section d'amenée 10 grâce à une vis-sans-fin.

La virole d'adaptation 21 est tubulaire ou, de préférence, tronconique. Elle comporte une enveloppe 22 reliant une embase inférieure 23 et une embase supérieure 24 sensiblement parallèles, l'enveloppe 22 définissant intérieurement une chambre de pyrolyse 25. Selon le mode de réalisation illustré à la figure 1, l'enveloppe 22 comprend une enceinte annulaire d'amenée de gaz 26, communiquant avec une entrée de gaz oxydant 12 et débouchant dans l'arrivée de gaz oxydant 11 du dispositif mélangeur 1 par une sortie 11a dans l'embase inférieure 23 et positionnée en vis-à-vis l'arrivée de gaz oxydant 11. L'entrée de gaz oxydant 12 est alors classiquement sous la forme d'un canal débouchant dans l'enceinte annulaire d'amenée de gaz 26 et est positionnée dans la partie supérieure de la virole d'adaptation 21, à proximité de l'embase supérieure 24. Alternativement, il est possible d'envisager que la virole d'adaptation 21 ne comprenne pas d'entrée de gaz oxydant.

L'embase inférieure 23 de la virole d'adaptation 21 est accolée à la plaque de fermeture 5 du dispositif mélangeur 1, c'est-à-dire que l'embase inférieure 23 de la virole d'adaptation 21 est supportée par la plaque de fermeture 5 du dispositif mélangeur 1. La virole d'adaptation 21 et le dispositif mélangeur 1 peuvent être assemblés de manière permanente ou, de préférence, amovible, par vissage ou boulonnage par exemple. Dans ce cas, l'embase inférieure 23 de la virole d'adaptation 21 et la plaque de fermeture 5 du dispositif mélangeur 1 comportent une série de trous positionnables en vis-à-vis et permettant l'insertion de vis ou boulons. Pour améliorer l'étanchéité, un joint (non représenté sur les figures) peut être positionné entre l'embase inférieure 23 de la virole d'adaptation 21 et la plaque de fermeture 5 du dispositif mélangeur 1.

La virole d'adaptation 21 est réalisée en un matériau pouvant résister aux conditions oxydantes, aux températures élevées, et aux pressions élevées. Par exemple, la virole d'adaptation 21 peut être réalisée en acier inoxydable ou en acier réfractaire.

### Appareillage

L'invention concerne également un appareillage 27 comprenant un gazéifieur 3 assemblé à un dispositif mélangeur 1 conforme à l'invention, de manière permanente ou, de préférence, amovible.

Le gazéifieur peut être tout gazéifieur connu de l'homme du métier. Il peut être horizontal ou vertical (avec flux ascendant ou descendant).

Le dispositif mélangeur est tel que décrit ci-dessus.

Selon un premier mode de réalisation, l'appareillage comprend un gazéifieur 3 assemblé à un dispositif mélangeur 1 qui est équipé d'un système d'amenée 20 de particules 2 et d'une virole d'adaptation 21 au gazéifieur 3. Selon ce mode de réalisation, le système d'amenée 20 de particules 2 et la virole d'adaptation 21 au gazéifieur 3 sont tels que décrits ci-dessus. De préférence selon ce mode de réalisation, la virole d'adaptation 21 comprend une entrée de gaz oxydant 12 et une sortie 11a de gaz oxydant dans l'embase 23, et le dispositif mélangeur 1 comprend une arrivée de gaz oxydant 11 sous la forme d'un ou plusieurs orifices cylindriques ou lumières arrondies dans la plaque de fermeture 5. Selon ce mode de réalisation, l'embase supérieure 24 de la virole d'adaptation 21 est par exemple assemblée au gazéifieur 3 par vissage ou boulonnage.

Selon un deuxième mode de réalisation, l'appareillage 27 comprend un gazéifieur 3 et au moins un, et typiquement un, dispositif mélangeur 1 non équipé d'un système d'amenée de particules, ni d'une virole d'adaptation au gazéifieur. Avantageusement selon ce mode de réalisation, le dispositif mélangeur 1 comprend une arrivée de gaz oxydant 11 sous la forme d'un canal débouchant dans la zone d'amenée de gaz oxydant 8. Selon ce mode de réalisation, les embases inférieure 23 et supérieure 24 sont par exemple assemblées par vissage ou boulonnage au gazéifieur.

Selon un troisième mode de réalisation, l'appareillage 27 comprend un gazéifieur 3, un premier dispositif mélangeur 1 qui est équipé d'un système d'amenée 20 de particules 2 et d'une virole d'adaptation 21 au gazéifieur 3, et au moins un second dispositif mélangeur 1 non équipé d'un système d'amenée de particules, ni d'une virole d'adaptation au gazéifieur. Selon ce mode de réalisation, les embases inférieures 23 et supérieures 24 sont assemblées par vissage ou boulonnage à la virole d'adaptation 21 et au gazéifieur 3.

Quel que soit le mode de réalisation, de manière analogue à ce qui est décrit ci-dessus pour l'équipement 19 selon l'invention, des joints peuvent être utilisés pour améliorer l'étanchéité de l'appareillage 27.

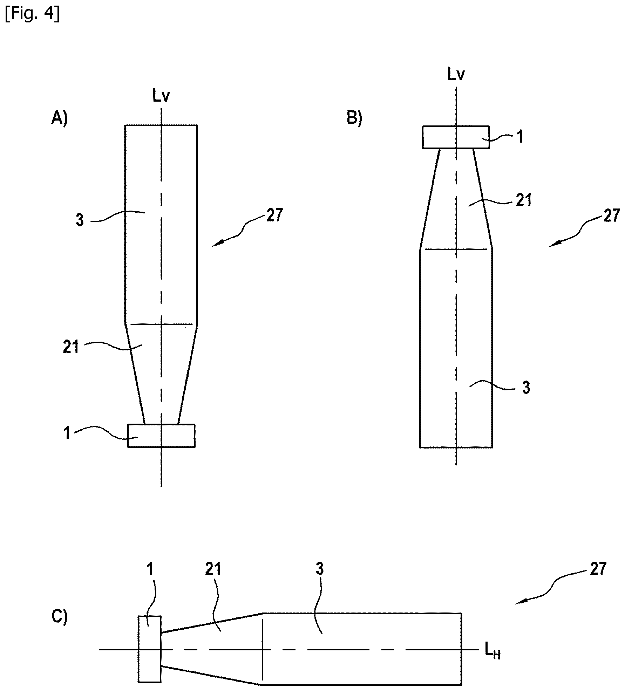

Quel que soit le mode de réalisation, l'appareillage 27 peut être utilisé en position horizontale ou verticale. Tel que cela est représenté à la figure 4, l'appareillage peut être positionné en position verticale avec un flux ascendant (illustré en A) ou descendant (illustré en B), c'est-à-dire selon l'axe longitudinal L_{V} de l'appareillage qui est alors vertical. Alternativement, l'appareillage peut être positionné en position verticale (illustré en C), c'est-à-dire selon l'axe longitudinal L_{H} de l'appareillage qui est alors horizontal.

### Procédé de pyrogazéification

L'invention concerne également un procédé de pyrogazéification comprenant les étapes suivantes :
a- disposer d'un appareillage 27 conforme à l'invention,
b- introduire des particules 2 par la section d'amenée 10 de particules,
c- introduire du gaz oxydant à travers l'arrivée de gaz oxydant 11 de sorte que la vitesse de gaz oxydant la sortie (16₂) du conduit d'amenée 16 de gaz oxydant va de 50 à 150 m/s.

L'appareillage 27, les particules 2 et le gaz oxydant sont tels que décrits ci-dessus.

A l'étape c, la vitesse de gaz oxydant est fonction de la modulation de puissance.

Selon un premier mode de réalisation, le dispositif mélangeur 1 permet l'introduction et le mélange de particules 2 de médium carboné (par exemple de biomasse ou de poudre de bois) dans un gaz oxydant. Les particules 2 sont alors typiquement solides, et peuvent par exemple être introduites à l'aide d'une vis-sans-fin en tant que système d'amenée 20 par exemple.

Selon ce premier mode de réalisation illustré aux figures 1 et 2, les particules 2 pénètrent dans le dispositif mélangeur 1 de l'appareillage 27 à travers la section d'amenée 10 grâce au système d'amenée 20 (qui est une vis-sans-fin dans l'exemple illustré). Par ailleurs, le gaz oxydant pénètre dans l'appareillage 27 par l'entrée de gaz oxydant 12 située sur la virole d'adaptation 21, s'écoule dans l'enceinte annulaire d'amenée de gaz 26 de la virole d'adaptation 21, pour ensuite pénétrer dans la zone d'amenée de gaz oxydant 8 du dispositif mélangeur 1 par d'entrée de gaz oxydant 11. Dans la zone d'amenée de gaz 8, le gaz oxydant peut être chauffé grâce au brûleur 18 si besoin. C'est notamment le cas lors de la mise en route de l'appareillage 27. Le gaz oxydant pénètre ensuite dans le conduit d'amenée 16 par son entrée 16₁, et en sort par sa sortie 16₂ pour former une veine cylindro-conique de flux gazeux. Tel que cela est apparent dans les figures 1 et 2, la sortie 16₂ du conduit d'amenée 16 est positionnée en bordure de la section d'amenée 10 de particules 2 : le flux gazeux sortant du conduit d'amenée 16 participe alors la formation d'un cône de particules. Le cône de particules est obtenu grâce à la veine cylindro-conique de flux gazeux, qui permet de prélever tangentiellement les particules. Le prélèvement des particules 2 par le flux gazeux est laminaire. Ainsi, le flux gazeux, en étant dirigé de sorte à former une veine cylindro-conique pour prélever tangentiellement les particules, crée une zone de mélange tourbillonnaire. En effet, tel que cela est illustré à la figure 2 notamment, les particules 2 prélevées et de gaz oxydant sont déviées et dispersées au sommet de la veine cylindro-conique de flux gazeux ; leur trajectoire est alors déviée vers la paroi cylindrique interne 7 puis vers la face cylindro-conique de liaison 15₄, formant ainsi un éclatement corollaire formant une couronne sphérique en s'appuyant sur la face cylindro-conique de liaison 15₄. Les particules 2 sont mises en suspension dans le gaz oxydant, et ceux-ci sont mélangés et agités dans la zone de mélange selon un régime turbulent et un mouvement vibratoire grâce à un éclatement corollaire sur la face cylindro-conique de liaison 15₄. L'arrivée continue d'un flux de gaz oxydant et de particules 2 provoque par ailleurs l'écoulement vers la chambre de pyrolyse 25 de la virole d'adaptation 21, selon un flux bouillonnant (déplacement vertical) de gaz oxydant et de particules. L'agitation du lit entraîné est permanente et donne l'aspect bouillonnant au flux de gaz oxydant et de particules, jusque dans le gazéifieur 3. Les réactions thermochimiques étant particulièrement rapides, celles-ci commencent dans la chambre de mélange 9. Plus précisément, l'eau contenue dans les particules est tout d'abord évaporée dans la chambre de mélange 9, avant la pyrolyse des particules (dans la virole d'adaptation 21) et l'oxydation. Les réactions thermochimiques du processus de pyrolyse se développent dans la chambre 25 de la virole d'adaptation 21. La formation d'un gaz de synthèse par réaction des gaz de pyrolyse sur les particules de charbon de bois, s'effectue dans la chambre 3 du gazéifieur.

Selon un deuxième mode de réalisation, illustré à la figure 3, le dispositif mélangeur 1 est disposé au sein du gazéifieur 3. Selon ce mode de réalisation, la section d'amenée 10 de particules 2 est dépourvue de système d'amenée de particules. En effet, selon ce mode de réalisation, la section d'amenée 10 de particules 2 communique avec un premier élément du gazéifieur 3₁ dans lequel le combustible est transformé en charbon pour générer des particules de charbon qui pénètrent alors la chambre de mélange 9 du dispositif mélangeur 1. Par ailleurs, du gaz oxydant pénètre par l'arrivée de gaz oxydant 11 du dispositif mélangeur 1, s'écoule dans la zone d'amenée de gaz oxydant 8, puis pénètre dans le conduit d'amenée 16 par son entrée 16₁, et en sort par sa sortie 16₂ pour former une veine tronconique ou cylindro-conique de flux gazeux dans la chambre de mélange 9. Ce flux gazeux entre alors en contact avec les particules 2 en provenance du premier élément 3₁ du gazéifieur. De manière analogue au premier mode de réalisation, les particules 2 et le gaz oxydant sont alors mélangés et agités selon un régime turbulent, pour créer une zone de mélange tourbillonnaire et un mouvement vibratoire dû à l'éclatement corollaire sur la paroi cylindrique interne 7 puis la face cylindro-conique de liaison 15₄. Les réactions thermochimiques ont alors lieu dès la chambre de mélange 9, et se poursuivent dans le second élément du gazéifieur 3₂.

Selon un troisième mode de réalisation, l'appareillage 27 comprend un gazéifieur 3, un premier dispositif mélangeur 1 qui est équipé d'un système d'amenée de particules et d'une virole d'adaptation au gazéifieur, et au moins un second dispositif mélangeur 1 non équipé d'un système d'amenée de particules, ni d'une virole d'adaptation au gazéifieur. Ce mode de réalisation combine alors les deux premiers modes de réalisation.

Quel que soit le mode de réalisation, le gaz oxydant se trouve avantageusement à une température allant de 150 °C à 250 °C à la sortie (16₂) du conduit d'amenée (16). Cette température peut être ajustée à l'aide du brûleur 18 lorsque celui-ci est présent sur le dispositif mélangeur 1. Par ailleurs, la zone d'amenée de gaz 8, et éventuellement l'enceinte annulaire d'amenée de gaz 26 lorsque la virole d'adaptation 21 est présente, étant contiguë à la chambre de mélange 9 du dispositif mélangeur 1, et le cas échéant la chambre de pyrolyse 25 de la virole d'adaptation 21, le gaz est chauffé grâce à la nature exothermique des réactions de gazéification (ou pyrogazéification).

Quel que soit le mode de réalisation, la gazéification peut être réalisée à pression atmosphérique (c'est-à-dire que la pression à l'intérieur de l'appareillage est égal la pression atmosphérique) ou à pression plus élevée (c'est-à-dire que la pression à l'intérieur de l'appareillage est supérieure à la pression atmosphérique), et typiquement une pression allant de 1,5 atm à 200 atm, de préférence de 2 atm à 60 atm, selon les conversions thermochimiques recherchées.

Selon un mode de réalisation de l'invention, les particules 2 et le gaz oxydant sont chauffés au démarrage du procédé à l'aide d'au moins un brûleur 18. Pour cela, lors d'une étape d ultérieure à l'étape c du procédé, du gaz combustible est ajouté au gaz oxydant avant son introduction dans la chambre de mélange 9, en quantité suffisante pour que le mélange de gaz combustible et de gaz oxydant soit combustible. Lorsque le brûleur 18 est allumé, une flamme se crée à la sortie 16₂ du conduit d'amenée 16 de gaz oxydant, de forme annulaire. Le ou les brûleurs permettent une montée rapide en température des particules et du gaz oxydant. La mise en route lors du démarrage du procédé de gazéification est alors rapide. Une fois que la température souhaitée dans la chambre de mélange est atteinte, il est alors possible d'éteindre le brûleur et d'arrêter l'introduction de gaz combustible. A titre d'exemples de gaz combustibles pouvant être employés dans le cadre de l'invention, on peut citer le propane, le méthane, et, de préférence, le syngaz ou biogaz.

## Revendications

1. Dispositif mélangeur (1) de particules (2) et d'un gaz oxydant, présentant une base (4) à partir de laquelle s'élève une paroi cylindrique externe (6), une paroi cylindrique interne (7) définissant avec la paroi cylindrique externe (6) une zone d'amenée de gaz (8), la paroi cylindrique interne (7) définissant intérieurement une chambre de mélange (9), la base (4) étant pourvue d'une section d'amenée (10) de particules (2) dans la chambre de mélange (9), le dispositif mélangeur (1) comprenant une arrivée de gaz oxydant (11) débouchant dans la zone d'amenée de gaz (8), ledit dispositif mélangeur (1) étant **caractérisé en ce que** :
- une tête conique d'injection (13) communique avec la zone d'amenée de gaz (8) pour déboucher dans la chambre de mélange (9), pour constituer une veine cylindro-conique de flux gazeux présentant un angle au sommet allant de 60 à 120°,
- la tête conique d'injection (13) comporte une semelle tronconique (14) supportée par la base (4) et surmontée par une paroi de raccordement (15) tronconique définissant un conduit d'amenée (16) cylindro-conique, et
- la paroi de raccordement (15) est positionnée entre la paroi cylindrique interne (6) et la semelle tronconique (14), et comporte une face cylindro-conique de liaison (15₄) bordant la veine cylindro-conique de flux gazeux et s'étendant jusqu'à la paroi cylindrique interne (7), pour créer une zone mélange tourbillonnaire.

2. Dispositif mélangeur (1) selon la revendication précédente, selon lequel la veine cylindro-conique de flux gazeux est positionnée en bordure de la section d'amenée (10).

3. Dispositif mélangeur (1) selon l'une quelconque des revendications précédentes, selon lequel le profil du conduit d'amenée (16) présente une partie de raccordement incurvée (16₃) et une partie rectiligne d'injection (16₄) dans la chambre de mélange (9).

4. Dispositif mélangeur (1) selon l'une quelconque des revendications précédentes, selon lequel le conduit d'amenée (16) de gaz oxydant comprend un décroché annulaire (17) à son entrée (16₁).

5. Equipement (19) comprenant le dispositif mélangeur (1) selon l'une quelconque des revendications précédentes équipé d'un système d'amenée (20) de particules (2) permettant l'introduction de particules (2) à travers la section d'amenée (10) de particules (2), et une virole d'adaptation (21) sur un gazéifieur (3), une embase inférieure (23) de la virole d'adaptation supportant une plaque de fermeture (5) du dispositif mélangeur (1).

6. Equipement (19) selon la revendication précédente, selon lequel le système d'amenée (20) est une vis sans fin.

7. Equipement (19) selon la revendication 5 ou 6, selon lequel la virole d'adaptation (21) est de forme tronconique.

8. Appareillage (27) comprenant un gazéifieur (3) assemblé un dispositif mélangeur (1) selon l'une quelconque des revendications 1 à 4.

9. Appareillage (27) selon la revendication précédente, selon lequel le gazéifieur (3) et le dispositif mélangeur (1) sont assemblés de manière amovible ou permanente.

10. Appareillage (27) selon la revendication 8 ou 9, selon lequel le dispositif mélangeur (1) est équipé d'un système d'amenée (20) de particules (2) permettant l'introduction de particules (2) à travers la section d'amenée (10) de particules (2), et d'une virole d'adaptation (21) au gazéifieur (3), une embase inférieure (23) de la virole d'adaptation supportant une plaque de fermeture (5) du dispositif mélangeur (1).

11. Appareillage (27) selon la revendication précédente, selon lequel la virole d'adaptation (21) est de forme tronconique.

12. Procédé de pyrogazéification comprenant les étapes suivantes :
a- disposer d'un appareillage (27) selon l'une quelconque des revendications 8 à 11,
b- introduire des particules (2) par la section d'amenée (10) de particules (2),
c- introduire du gaz oxydant à travers l'arrivée de gaz oxydant (11) de sorte que la vitesse de gaz oxydant à la sortie (16₂) du conduit d'amenée (16) de gaz oxydant va de 50 à 150 m/s.

13. Procédé selon la revendication précédente, comprenant une étape d ultérieure à l'étape c, consistant à introduire du gaz combustible dans le gaz oxydant, et allumer un brûleur (18) présent sur le dispositif mélangeur (1), afin d'enflammer le gaz combustible dans la chambre de mélange (9).

14. Procédé selon la revendication 12 ou 13, selon lequel le flux de gaz oxydant entrant en contact des particules (2) crée un flux tourbillonnaire de gaz oxydant et de particules, avantageusement par un éclatement corollaire.

15. Procédé selon l'une quelconque des revendications 12 à 14, selon lequel le gaz oxydant à l'étape c est chauffé par un brûleur de sorte à se trouver à une température allant de 150 °C à 250°C à la sortie (16₂) du conduit d'amenée (16).

16. Procédé selon l'une quelconque des revendications 12 à 15, selon lequel le gaz oxydant est choisi parmi l'air, O₂, CO₂, la vapeur d'eau, ou un mélange de ces gaz éventuellement en combinaison avec H₂.
